# EUROPEAN PATENT SPECIFICATION

(11) **EP 3 375 593 B1**
(45) Date of publication and mention of the grant of the patent: **12.06.2019**
(21) Application number: 17161263.3
(22) Date of filing: 16.03.2017
(51) Int. Cl.: B29C 49/24, B29B 11/08, B65D 23/08, B65D 1/02, B29C 49/00, B29L 31/00, B29K 311/14, B29K 1/00, B29K 67/00, B29K 23/00, B29K 27/06, B29K 601/00

(54) **METHOD FOR FORMING A CONTAINER WITH A PLASTIC LINER AND FIBRE-BASED SHELL BY BLOW MOLDING, PREFORM AND CONTAINER**
VERFAHREN ZUM BLASFORMEN EINES BEHÄLTERS MIT EINER KUNSTSTOFFAUSKLEIDUNG UND EINE HÜLLE MIT FASERN, VORFORM UND CONTAINER
MÉTHODE DE FABRICATION D'UN CONTENANT COMPRENANT UN REVÊTEMENT PLASTIQUE ET UNE COQUE FIBREUSE PAR SOUFFLAGE, PRÉFORME ET CONTAINER

(43) Date of publication of application: 19.09.2018
(73) Proprietor: BillerudKorsnäs AB, 169 27 Solna (SE)
(72) Inventor: Ankerfors, Mikael, SE-194 53 Upplands Väsby (SE); Quasters, Mikael, SE-531 56 Lidköping (SE)
(74) Representative: Kransell & Wennborg KB

(56) References cited:
- WO-A1-03/055663
- WO-A1-2014/184813
- WO-A1-2016/083678
- DE-U1- 20 219 427
- US-A- 3 956 441
- US-A- 4 024 975
- US-A- 4 286 940

## Description

### Technical field

This disclosure relates in general to packaging technology, and in particular to containers for liquid goods, said containers involving thermoplastic inner liner, for example a blow molded inner liner, and a fibre-based shell.

### Background

Modern packaging technology has made it possible to store and distribute food and beverages safely and conveniently, preventing contamination and spoiling, and extending the shelf life and simplifying handling in a fashion totally unprecedented in history. While this development has helped to minimize the waste of food, and greatly simplified the distribution of food on a global scale, it has also resulted in increased amounts of packaging waste that needs to be addressed, preferably recycled.

Traditionally beverages have been supplied in glass bottles, and canned food in glass jars or metal cans. Systems for the collection and recycling of glass and metals have been established, but require a certain degree of consumer engagement and participation as the bottles, jars and cans need to be separated from other waste. In countries where there is a tradition of consumer awareness and recycling, and the necessary systems are in place, a large portion of packaging glass and metal is already recycled. This results in considerable savings in energy and natural resources. However, a portion of glass and metal packaging still unfortunately end up in landfills. Further, glass and metal packaging is heavy, and a reduction of weight would help to save energy in the distribution chain.

Plastic bottles and containers offer a solution for a lighter packaging and plastics such as PET and HDPE are well suited for packaging foods and beverages. The blow molded bottle is a widely used packaging, in particular for liquid goods, in particular beverages. Consequently, there is a need for facilitating the recycling of the plastic material as well as minimizing the amount of plastic used.

This has driven a development towards lighter plastic packaging solutions, both in terms of thinner and lighter packaging, and the use of composite materials. One example is plastic laminated cardboard container. In this case the cardboard from which the body of the container is formed, may be virgin or recycled material. The cardboard is, before converting into a container, laminated with a suitable barrier coating, which also acts as a barrier between the liquid and the cardboard and protects the contents from certain gases such as oxygen. The resulting product may however be difficult to recycle.

Recently a new type of packaging has been developed, where a blow molded plastic bottle or container is coupled with a fibre-based shell, preferably a cellulose fibre-based shell. This makes it possible to minimize the amount of plastic compared to an ordinary plastic bottle, as the plastic container can be made very thin as the fibre-based shell provided the rigidity. Compared to ordinary liquid packaging, it also becomes easier to separate the plastic and fibre-based parts, simplifying recycling of both materials. Systems and processes for the recycling of both plastic and cellulose fiber-based materials are in place, but the functioning of these systems require that the components are easy to separate. In the opposite case, both streams will be contaminated by residues of the other material, where in particular plastic residues remaining in the fibre fraction makes this more difficult to recycle.

Blow molding is a widely used technology for producing packaging for liquids. There are currently three main methods of blow molding: extrusion blow molding (EBM), injection blow molding (IBM), and injection stretch blow molding (ISBM). In EBM, plastic is melted and extruded into a hollow tube (a preform or parison). This preform is then captured by closing it into a cooled metal mold. Air is then blown into the preform, inflating it into the shape of the hollow bottle, container, or part. After the plastic has cooled sufficiently, the mold is opened and the part is ejected.

EBM can be sub-divided into continuous and intermittent EBM. In the continuous EBM, the preform is extruded continuously and the individual parts are cut off by a suitable knife. In intermittent EBM there are two processes: straight intermittent and the so called accumulator method. Straight intermittent is similar to injection molding. Here the extruder screw turns, then stops and pushes the melt out. In the accumulator method, an accumulator gathers melted plastic and when the previous mold has cooled and enough plastic has accumulated, a rod pushes the melted plastic and thus forming the preform.

The EBM process is widely used for the manufacture of polyethylene containers such as milk bottles, shampoo bottles etc. There are many advantages of blow molding, such as comparatively low tool and die costs and fast production rates. EBM also allows the molding of complex parts, and for example handles can be incorporated in the design.

There are however disadvantages, such as low strength. For sensitive products, such as foods and beverages, the barrier properties may be insufficient, and to increase barrier properties multilayer preforms of different materials are used. This makes the products less suitable for recycling.

Injection blow molding (IBM) is used for the production of hollow glass and plastic objects in large quantities. In the IBM process, the polymer is injection molded onto a core pin; then the core pin is rotated to a blow molding station to be inflated and cooled. The process is divided into three steps: injection, blowing and ejection. This is the least-used of the three blow molding processes, and is typically used to make small medical and single serve bottles. The main advantage is that IBM produces an injection molded neck with high accuracy. The IBM process is however mainly suited for small capacity bottles as it is difficult to control the base center during blowing. There is also no increase in barrier strength as the material is not biaxially stretched.

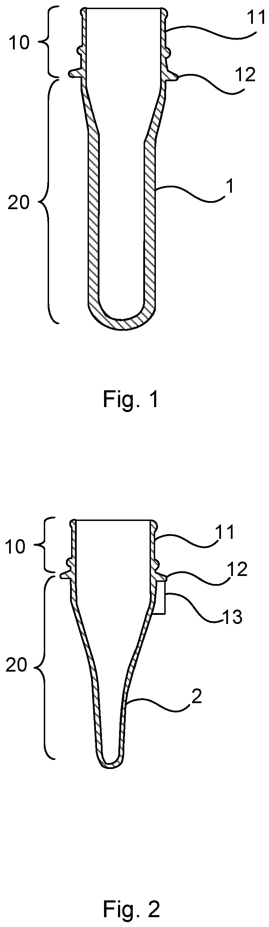

Consequently, the currently most preferred process for large scale industrial production of blow molded containers of high quality is the injection stretch blow molding (ISBM) process. This can be performed as a single-stage or two-stage process. Of these, the two-stage appears to be the most widely used. The plastic is first molded into a preform using the injection molding process. These preforms are produced with proximal portion or "neck" with the dimension and features required for the finished bottle, for example threads or lugs for engaging a cap or lid. The distal portion or "body" of the preform constitutes the thermoplastic material which upon stretch blow molding forms the container. A generic preform is shown in cross-section in Fig. 1.

These preforms are normally packaged, and can be economically transported to the bottle blowing and filling plant, as the preforms are sufficiently robust for bulk packaging, and require little space. At the bottle blowing plant, the preforms are fed into a reheat stretch blow molding machine. In the ISBM process, the preforms are heated (typically using infrared heaters) above their glass transition temperature, then blown using high-pressure air into bottles using metal blow molds. In the ISBM process, the preform is always stretched with a core rod as part of the process. This produces the biaxially stretched wall with improved strength.

The biaxial stretching is important for improving the strength and barrier properties of the finished product. In the first vertical stretching, a core rod is inserted into the still hot preform (single-step process) or in the reheated preform (two-stage process). This stretches the material vertically. The blowing which follows functions to stretch the material horizontally, influencing polymer shape and interaction. The resulting material is less porous and has improved barrier properties, compared to other blow molded articles manufactured without the vertical stretching. These properties make this the preferred method for producing bottles for carbonated beverages.

The ISBM process is suitable for the production of very high volumes, and preforms are often produced and sold as a completed item for a third party to blow. The ISBM imposes very few restrictions on bottle design. It is suitable for cylindrical, rectangular or oval bottles.

It however remains difficult to minimize the amount of plastic used in stretch blow molded containers, in particular bottles for carbonated beverages, and to address the many disadvantages that arise when the wall thickness is reduced.

US 2014252032 (Julie Corbett et al.*,* Ecologic Brands Inc.) discloses a container including a liquid-holding vessel and a skeleton shell supporting the liquid-holding vessel. The liquid-holding vessel may comprise a flexible polymer or plastic material for preventing contact between a liquid stored in or dispensed from the container and the skeleton. The liquid-holding vessel and the closure may be formed from a minimal amount of polymer or plastic. The disclosure also provides for a connection of a liquid-holding vessel with a fitment to the skeleton shell using ultrasonic means. Further, a skeleton shell is provided with mating features allowing the skeleton shell to be formed with smooth edges.

WO 2013/082450 (Julie Corbett et al.*,* Ecologic) discloses a process of manual, semi-automatic and fully- automated integration of discrete components into a container that results in fast, reliable, cost-effective, and scalable production of composite containers. The process can be embodied in manufacturing equipment that has a series of stations and may be called an assembly device. The equipment can produce containers, tubs, canisters, cartridges, etc. which are easily separated into different bio-degradable or compostable parts. The container may have a fitment attached to the liquid-holding liner, which fitment may not turn when the mechanical capper applies the cap in the commercial filling process or when a user attempts to unscrew a cap or top on the container.

US 2014166265 (Thomas E. Nahill and Bruce W. Larsen, Continental PET Technologies Inc.) discloses a preform assembly for blow molding a container including a molded plastic preform having a body and a neck with an external surface. The neck includes a plurality of spaced lands molded integrally with the neck and the body and defining the external surface of the neck, and a plurality of open spaces between the lands. A plastic finish ring is molded separately from the preform and is externally secured over the lands. The open spaces between the lands reduce heat transfer between the preform neck and the finish ring. In two exemplary embodiments of the invention, the lands include either spaced axial ribs or spaced circumferential ribs on the preform neck, and the open spaces include either spaced axial channels or spaced circumferential channels between the ribs.

US4024975 discloses plastic containers having internal reinforcing ribs. The containers are formed by a molding operation including pre-blow and final-blow steps. The pre-blow step includes inflating a blowable plastic parison into contact with the cavity walls of a first blow mold to form a blown pre-form, the cavity walls of the first blow mold including a plurality of concave grooves to form a pattern of convex or protuberant ribs on the outer-periphery of the preform. The final-blow step includes positioning the blown, ribbed pre-form within a second or final blow mold having a cavity defined by substantially smooth wall surfaces conforming to the exterior configuration of the desired container. Next, the pre-form is blown to stretch and expand against the cavity walls of the second mold, during which step the convex ribs on the exterior of the pre-form are flattened, forming concave portions intermediate convex reinforcing ribs on the internal wall surface of the container.

US4286940 discloses an injection blow molding apparatus and a method, which produces articles by injecting a settable material at high pressure into the cavity of an injection mold to form a parison and then expanding the parison in a blow mold defining the configuration of the article. The injection mold defines intricate detail in thewalls of the injection cavity and produces a parison with the detail formed thereon. Detail on the expanded portion of the parison is preserved in the blow mold and appears on the surface of the blown article without loss of definition.

US3956441 discloses plastic containers having internal reinforcing ribs that are formed by a molding operation including pre-blow and final-blow steps. The pre-blow step includes inflating a blowable plastic parison into contact with the cavity walls of a first blow mold to form a blown pre-form, the cavity walls of the first blow mold including a plurality of concave grooves to form a pattern of convex or proturburent ribs on the outer periphery of the preform. The final-blow step includes positioning the blown, ribbed pre-form within a second or final blow mold having a cavity defined by substantially smooth wall surfaces conforming to the exterior configuration of the desired container. Next, the pre-form is blown to stretch and expand against the cavity walls of the second mold, during which step the convex ribs on the exterior of the pre-form are flattened, forming concave portions intermediate convex reinforcing ribs on the internal wall surface of the container.

WO 2016/083678 concerns the production of preforms from polyethylene terephthalate (PET) for the production of bottles by stretch-blow moulding. The deformation zone of the preform, located under the retaining flange, is provided with several longitudinal ridges of which the flanks determine an increase in the surface area of the deformable zone, by a certain value relative to the surface area represented by the same external diameter of a cylindrical preform without ridges, for a same length of this zone. This increase in the surface area makes it possible to reduce, to the same proportion, the thickness of material in the deformable zone. The tops and the bottoms of said ridges are radiated depending on the thickness of material in order to keep said thickness constant in each section of the deformable zone, of which the ends of the ridges are radiated in order to ensure the centring of the preform in the feed guide of the stretch-blow moulding machine. Reducing the thickness of the preform makes it possible to reduce the cooling cycle during the injection and to increase production rates.

WO 03/055663 discloses a process for injection molding, in an injection press or in installations comprising an injection press and blower, of the performer of thermoplastic material for producing blown receptacles, with an injection mold that presents the part, necessarily movable to permit it to open on completion of molding, comprising two or more elements that may be constructed of aluminium alloys, light alloys in general, translating radially, when the die opens, in relation to the XX axis of the preformer.

WO 2014/184813 discloses a method and a system for producing disposable container from pulp slurry containing fiber. A wet moulded product is providing having a container like shape, which is placed into a blow mould having plurality of ventilation holes. Subsequently, a material in web form is placed into the moulded product while the moulded product is in a wet state. Finally, the material in web form is blown into the shape of the blow mould causing a simultaneous expansion of the moulded product into the shape of the blow mould.

DE20219427 (U1) discloses a hollow component that has a closed bottom and a cap with a dispensing opening. At least one section of the hollow component is enveloped in a casing, which can be pushed along in the direction of the dispensing opening in such a way that the then protruding edge imparts to the hollow component a standing stability when the enclosed dispensing opening is pointing downwards. The casing is rigid and is installed with increased friction in relation to the hollow component.

### Summary

One object of the present disclosure is to make available an improved composite packaging comprising a blow molded plastic inner container and an outer fibre-based shell, wherein the inner plastic container is connected to the outer shell in a manner preventing dislocation of the parts in relation to each other when the inner container is opened.

Another object is to make available an improved preform for the manufacture of a composite packaging as above.

Another object is to make available an improved blow molding process, preferably an improved stretch blow molding process, which makes it possible to produce containers with a reduced amount of plastic but with unchanged or improved properties with regard to strength, handling, and recyclability.

These and other objects are achieved by the aspects and embodiments defined in the independent claims. Further advantageous embodiments have been specified in the dependent claims.

A first aspect relates to a method for forming a container comprising a plastic liner and a fibre-based shell, said method comprising
- placing a heated preform in a fibre-based shell,
- molding, for example stretch blow molding, the preform forming a liner inside the shell,
wherein the preform has a proximal portion and a distal portion, and a protrusion, wherein the proximal portion remains substantially unchanged, and the distal portion forms the liner as a result of molding, for example stretch blow molding, and in that said protrusion forms a feature of the liner which engages with the shell and restricts movement of the liner in relation to the shell. The feature is preferably a protruding element. The protrusion of the preform of the present disclosure as well as the protruding element of the liner of the present disclosure typically protrude radially.

Said at least one protrusion engages with the shell already when the preform is inserted into the shell prior to stretch blow molding.

According to an embodiment, freely combinable with the above aspect and embodiments, only a portion of said at least one protrusion is heated to the softening temperature of the preform material.

According to yet another embodiment, freely combinable with the above aspect and embodiments, the container is a container having a screw cap or screw lid and said at least one protrusion restricts rotational movement of the liner in relation to the shell when the cap or lid is opened and/or closed.

According to a further embodiment, freely combinable with the above aspect and embodiments, the container is a container for pressurized goods.

Another aspect relates to a preform for forming a plastic liner inside a fibre-based shell by molding, for example stretch blow molding, wherein the preform has a proximal portion which remains substantially unchanged during stretch blow molding, and a distal portion which as a result of the stretch blow molding forms a liner inside the shell, wherein the preform has at least one protrusion which upon stretch blow molding forms a feature of the liner which engages with or contacts the shell restricting movement of the liner in relation to the shell.

According to said second aspect, said at least one protrusion is located in a transition area between the proximal portion which remains substantially unchanged during blow molding and the distal portion which as a result of the blow molding forms the liner.

According to another embodiment of said second aspect, freely combinable with the above, said at least one protrusion engages with the shell when the preform is inserted into the shell prior to molding, for example stretch blow molding.

According to another embodiment of said second aspect, freely combinable with the above aspects and embodiments, said at least one protrusion has a shape chosen from a rectangular shape, a tapered shape, a wedge-like shape, a square shape, a sharp point, a semi-spherical point, an elongated sharp or rounded ridge, spline, serrated shape, hemispherical shape or welt-like shape or a combination thereof.

According to yet another embodiment of said second aspect, freely combinable with the above aspects and embodiments, at least three protrusions are present, equally spaced around the periphery of the preform.

According to yet another embodiment of said second aspect, freely combinable with the above aspects and embodiments, said at least one protrusion is shaped as an annular protrusion around the preform.

According to a further embodiment of said second aspect, freely combinable with the above aspects and embodiments, said at least one protrusion is positioned so, that only a part of said at least one protrusion, or in the case of two or more protrusions, only a sub-group of the protrusions reach the softening temperature of the preform material when the preform is heated prior to stretch blow molding.

A third aspect relates to a container comprising a fibre-based shell and plastic liner formed by molding, for example stretch blow molding a preform inside the shell, said liner having a neck and a body, wherein the stretch blow molded liner has a feature which engages with the shell restricting movement of the liner in relation to the shell. The feature is a protruding element.

Said feature of the liner which contacts the shell and restricts movement of the liner in relation to the shell is localized in the part of the liner adjacent to the neck of said liner.

According to an embodiment of said third aspect, freely combinable with above aspects and embodiments, said feature which engages the shell and restricts movement of the liner in relation to the shell comprises material which was supplied in the form of at least one protrusion of the preform used to produce the liner.

According to another embodiment of said third aspect, freely combinable with above aspects and embodiments, the container is a container for pressurized goods, having a screw cap or screw lid, and the liner contacts the shell and restricts rotational movement of the liner in relation to the shell when the screw cap or screw lid is closed and/or opened, and allows the separation of the liner from the shell when the container is recycled.

### Short description of drawings

Different aspects and embodiments will be disclosed in closer detail in the following description, examples and claims, with reference to the accompanying drawing figures, which are not necessarily drawn to scale.
Fig. 1 shows a cross section of generic preform having a "neck" or proximal end with a standardized neck finish including threads or lugs for attaching a cap, and a ring for facilitating handling of the preform.
Fig. 2 shows a cross section of preform according to an embodiment of the invention, said preform having reduced weight, a proximal end with a standardized neck finish including threads or lugs for attaching a lid or cap, and at least one protrusion or spline for engaging with a fibre-based shell.
Fig. 3 is a partial cut-out view of a container according to an embodiment, said container comprising a cap, a blow molded liner, and a fibre-based shell, wherein the liner engages the fibre-based shell via protrusions or splines.
Fig. 4 is a detail view of the upper part of a container as in Fig. 3, with the cap removed, and showing in cross section how the protrusions or splines engage the fibre-based shell.
Fig. 5 shows one embodiment where a preform has at least one protrusion or spline positioned directly adjacent the ring.
Fig. 6 shows three detail views of the encircled part of the preform or parison in Fig. 5 where (A) shows an embodiment where a protrusion is positioned directly adjacent to the ring, and has a tapered form or slanted distal part; (B) shows an embodiment where a protrusion is positioned directly adjacent to the ring, and has a substantially rectangular distal part; and (C) shows an embodiment where a protrusion is separated from the ring, forming a separate vane or blade.
Fig. 7 shows three embodiments of a preform in cross section as seen from above, where (A) shows one substantially square protrusion; (B) shows three equally spaced protrusions; and (C) shows eight equally spaced protrusions.
Fig. 8 shows three embodiments of a preform in cross section as seen from above, where (A) shows one substantially rectangular or elongated protrusion; (B) shows three equally spaced protrusions; and (C) shows five equally spaced protrusions. The protrusions are shown in cross section, and can be separate block-shaped protrusions, or elongated, spline-like protrusions.
Fig. 9 shows three embodiments of a preform in cross section as seen from above, where (A) shows one protrusion shaped as a spline or vane ; (B) shows three equally spaced splines; and (C) shows six equally spaced splines.
Fig. 10 shows three embodiments of a preform as seen from above, where (A) shows one protrusion shaped as a sharp spline or ridge; (B) shows three equally spaced protrusions; and (C) shows six equally spaced protrusions.
Fig. 11 shows another three embodiments of a preform as seen from above, where (A) shows one rounded protrusion; (B) shows three equally spaced rounded protrusions; and (C) shows six equally spaced rounded protrusions.
Fig. 12 shows another three embodiments of a preform as seen from above, where (A) shows one protrusion with a comb like structure comprising a number of thin blades; (B) shows three equally spaced comb like protrusions; and (C) shows six equally spaced comb like protrusions. As a result of the blow molding, these will expand and offer multiple contact surfaces between the liner and the fibre-based shell.

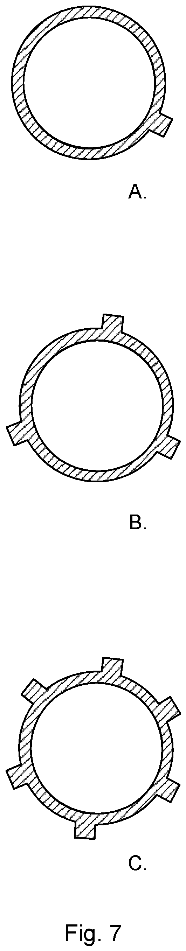

In the figures 7 - 12, the protrusions or splines are shown from above, in cross section, and it should be understood that they can become drawn-out, extending along the length of the liner or parts thereof, as a result of the blow molding process.

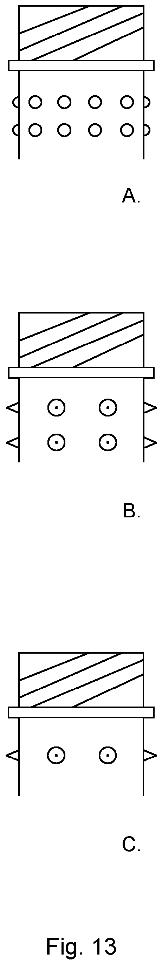

Fig. 13 shows different embodiment where the protrusions are shaped as semispherical or conical points, extending substantially radially outwards from the longitudinal center line of the preform, and positioned below the neck. In A and B, embodiments are shown where the protrusions are arranged in at least two levels, an upper and a lower level. C shows an embodiment with at least one level of protrusions.

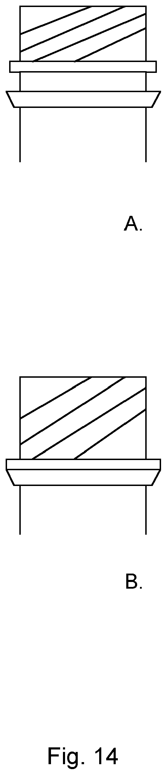

Fig. 14 shows another embodiment where the protrusion is shaped as an annular or ring-shaped and preferably conically shaped thickening of the preform. In A, this conical thickening is separate from the ring which constitutes part of the standardized neck of a preform. In B, the conical thickening is shown as an adjacent or possibly even integrated part of the ring which constitutes part of the standardized neck of a preform.

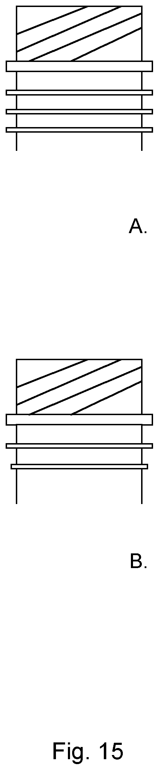

Fig. 15 shows an embodiment where the protrusions are formed as annular flanges positioned below the ring on the neck of the preform. In A, there flanges are shown, where the flanges are of approximately the same thickness and diameter. In B, two flanges are shown, where the lower flange has a smaller diameter than the upper flange.

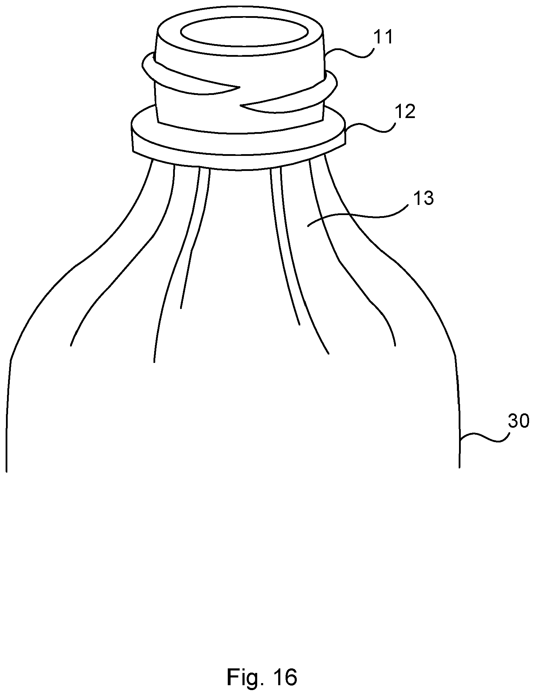

Fig. 16 schematically shows a perspective view of the upper part of a blow molded liner, showing the neck with threads and a ring (optional) and protrusions which - as a result of the stretch blow molding - have become drawn out. The protrusions have maintained their shape closest to the ring, whereupon their shape gradually becomes more and more drawn out.

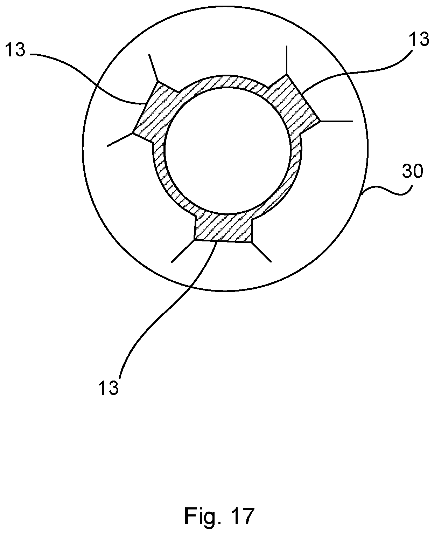

Fig. 17 shows schematically a blow molded liner from above, without the optional ring, and having three equally spaced protrusions which - as a result of the stretch blow molding - have become drawn out.

### Detailed description

Before the present invention is described, it is to be understood that the terminology employed herein is used for the purpose of describing particular embodiments only and is not intended to be limiting, since the scope of the invention will be limited only by the appended claims and equivalents thereof.

It must be noted that, as used in this specification and appended claims, the singular forms "a", "an" and "the" also include plural referents unless the context clearly dictates otherwise.

The term "goods" as in "pressurized goods" is intended to encompass any goods that need to be packaged, such as foods and beverages, perishable products again including foods and beverages, and in particular liquid and semi-liquid foods and beverages. The term "pressurized goods" includes but is not limited to carbonated beverages, foods packed under a protecting gas, products that build pressure after packaging, for example as a result of fermentation etc.

The expression "fibre-based shell" is intended to cover all packaging materials comprising fibres, preferably cellulose fibres. The preferred typ of "fibre-based shell" is a shell made from a paper stock or a paper pulp. As well known to a person skilled in the art, a paper stock may contain many components in addition to cellulose fibres, such as fillers, binders and impurities.

The term "plastic" as in "plastic liner" and "preform made of plastic" denotes any and every type of thermoplastic material suitable for blow molding (such as injection blow molding or stretch blow molding) and allowed for use in packaging, and in particular in the packaging of food and beverages. Examples of thermoplastic materials for use in blow molding include the following:
- low density polyethylene (LDPE)
- high density polyethylene (HDPE)
- polyethylene terephthalate (PET)
- polypropylene (PP)
- polylactide (PLA)
- polyvinyl chloride (PVC)
- polyethylene furanoate (PEF)
- polyethylene naphthalate (PEN)

The most frequently used thermoplastic is PET. A person skilled in the art is fully capable of selecting a suitable plastic material without inventive effort. It is also possible to use composite material and various coatings to improve the barrier properties of the liner, and again, a person skilled in the art can choose appropriate alternatives without departing from the scope of the present disclosure.

The expression "pressurized goods" is intended to encompass all goods, including food and beverages, which are packaged under pressure. Examples include, but are not limited to pressurized liquids, such as beverages packed in an inert atmosphere, for example fruit juices packed with an inert gas, for example nitrogen, in the dead space of the container, and carbonated beverages. The most preferred embodiments relate to methods, preforms and containers for carbonated beverages. The method and components disclosed herein are however equally suitable for the packaging of other goods, and in particular liquid or semi-liquid food.

The term "restricts" as in "restricts movement of the liner in relation of the shell" encompasses various degrees of .restriction of movement, from a locking function substantially preventing all movement of the liner in relation to the shell, to an increased friction which makes movement more difficult preventing it under normal handling of the container, but for example allowing disengagement of the shell from the liner when the container is recycled.

The terms "engage" and "contact" as in "a feature of the liner which contacts and/or engages with the shell" encompass different types of contact. An element of the liner can for example push into the inner surface of the fibre-based liner in one or more local positions, or lie snug against the surface over a larger area. It is also conceived that an elastic contact can take place, the liner material pressing against the shell, and the shell stretching locally and reversibly, holding the liner in an elastic grip.

A first aspect relates to a method for forming a container comprising a plastic liner and a fibre-based shell, said method comprising
- placing a heated preform in a fibre-based shell,
- molding, preferably stretch blow molding the preform forming a liner inside the shell, wherein the preform has a proximal portion and a distal portion, and a protrusion, wherein the proximal portion remains substantially unchanged, and the distal portion forms the liner, for example as a result of stretch blow molding, and in that said protrusion forms an element of the liner which contacts the shell and restricts movement of the liner in relation to the shell.

As a step in the molding process, for example in stretch blow molding, the preform is heated which softens the plastic in the preform. During stretch blow molding, the heated plastic including at least part of the protrusions, extends and expands until encountering the boundaries of the mold in which the stretch blow molding takes place. When the liner is formed inside a fibre-based shell, the liner is pressed against the inner surface of the fibre-based shell. The protrusions according to embodiments disclosed herein result in elevated portions mainly on the neck and shoulder portion of the liner, contacting or engaging the fibre-based shell. As also explained previously, with the term contacting or engaging it is intended to encompass mechanical engaging, for example that the protrusions or elevated portions press into the shell and create increased friction between the liner and shell, mechanical locking or both.

According to said first aspect, said at least one protrusion engages with the fibre-based shell when the preform is inserted into the shell already prior to stretch blow molding. As a step in the stretch blow molding process, the preform is placed in contact with the fibre-based shell, shortly before the preform is subjected to stretch blow molding. The protrusions according to embodiments disclosed herein assist in centering the preform in the shell, and to keep the shell attached to the preform when this is transported further in the stretch blow molding machine. This is a significant advantage, as the relatively light fibre-based shell could otherwise become dislocated.

According to yet another embodiment, freely combinable with the above aspect and embodiments, only a portion of said at least one protrusion is heated to the softening temperature of the preform material. In the stretch blow molding process, the preform is heated to a temperature at which the material softens and can be stretched and expanded to the desired form. This heating step is preferably controlled accurately, so that the proximal, standardized portion of the preform, does not change. It is important that the shape and dimensions of the proximal portion remains the same, to ensure that a cap or lid can be tightly attached to the container. According to an embodiment of the method, the preform is heated so, that only a part of said at least one protrusion is heated and softens. In this fashion, several advantages are achieved. First, part of said at least one protrusion remains rigid, and can assist in establishing a connection between the preform and the fibre-based shell in the initial stages of the process of forming a container. The heated preform is placed in the fibre-based shell and this combination is transported to the stretching and blowing station of a stretch blow moulding (SBM) machine. An advantage of a protrusion according to embodiments disclosed herein is that the shell which is rather light and thin, and which may be not be possible to grab without deforming the same, is now securely attached to the preform and transported. SBM machines are already adapted to holding on to the neck, the proximal part of the preform, and by securing the fibre-based shell to the preform, further modifications of the SBM machines can be minimized. Another advantage is that said at least one protrusion helps to center the preform in the fibre-based shell. To this end, the preform preferably has three or more protrusions regularly spaced around the periphery of the preform.

According to yet another embodiment, freely combinable with the above aspect and embodiments, the container is a container having a screw cap or screw lid and said at least one protrusion prevents rotational movement of the liner in relation to the shell when the cap or lid is opened and/or closed.

According to a further embodiment, freely combinable with the above aspect and embodiments, the container is a container for pressurized goods, preferably pressurized liquids. It is in the packaging of pressurized liquids, for example liquids packaged under a protecting inert atmosphere, or carbonated beverages, that the combination of the barrier properties of the thin liner and the rigidity of the fibre-based shell becomes an advantage. The combination of a plastic liner providing barrier properties, and a fibre-based shell, providing mechanical stability, makes it possible to produce packaging with an increased amount of recyclable material, here the fibre-based shell, and reduced amounts of plastic.

According to yet another embodiment, freely combinable with the above aspect and embodiments, the container is a container having a screw cap or screw lid and said at least one protrusion prevents rotational movement of the liner in relation to the shell. Screw caps and screw lids are in wide use, as they withstand high pressure, provide a good seal, and can be opened and closed several times. For foods and beverages these properties are particularly advantageous. The method disclosed herein makes it possible to manufacture a container which can be opened and closed with the twisting movement required for screw caps and lids, but without the risk of dislocating the plastic liner from the fibre-based shell. At the same time, it is an advantage that this effect can be achieved without affixing the liner to the shell by glue or hot melt adhesion, as this would make the separation of the components difficult, and negatively influence the recycling of the same.

Another aspect of this disclosure relates to a preform for forming a plastic liner inside a fibre-based shell by molding, for example by stretch blow molding, wherein the preform has a proximal portion which remains substantially unchanged during stretch blow molding, and a distal portion which as a result of the stretch blow molding forms a liner inside the shell, wherein the preform has at least one protrusion which upon stretch blow molding forms an element of the liner which contacts the shell and restricts movement of the liner in relation to the shell.

According to an embodiment of said second aspect, said at least one protrusion engages with the shell when the preform is inserted into the shell.

Said at least one protrusion is located in a transition area between the proximal portion which remains substantially unchanged during blow molding and the distal portion which as a result of the blow molding forms the liner.

According to an embodiment, freely combinable with the above aspects and embodiments, said at least one protrusion has a shape chosen from a rectangular shape, a tapered shape, a wedge-like shape, a square shape, a sharp point, a semi-spherical point, an elongated sharp or rounded ridge, spline, serrated shape, hemispherical shape or welt-like shape or a combination thereof.

According to a preferred embodiment, freely combinable with the above aspects and embodiments, at least three protrusions are present, equally spaced around the periphery of the preform.

According to another embodiment, freely combinable with the above aspects and embodiments, said at least one protrusion is shaped as an annular protrusion around the preform.

According to a further embodiment, freely combinable with the above aspects and embodiments, said at least one protrusion is positioned so, that only a part of said at least one protrusion, or in the case of two or more protrusions, only a sub-group of the protrusions reach the softening temperature of the preform material when the preform is heated prior to stretch blow molding.

Fig. 1 shows a cross section of a generic preform 1 according to the state of the art. A preform has a "neck" or proximal end 10 comprising threads 11 or lugs for attaching a cap or lid (not shown), and a ring 12 which simplifies the handling of the preform in manufacture of the same, in the stretch blow molding process, and in the filling and handling of the container. The ring 12 may also serve as an abutment for the cap or lid. A preform also comprises a "body" or distal part 20, which forms the main part of the container upon stretch blow molding. It should be noted that as a first step of the stretch blow molding, the preform is heated. This heating softens the distal body of the preform, in order to make it possible to stretch and blow the body. The proximal part should however remain unchanged, in order to ensure a good fit between the neck and the cap or lid.

Fig. 2 shows a cross section of preform 2 according to an embodiment of the invention, said preform having reduced weight, a proximal end 10 with a standardized neck finish including threads 11 or lugs for attaching a lid or cap (not shown), a ring 12 (optional), a "body" or distal part 20, and at least one protrusion or spline 13 for engaging with a fibre-based shell. The spline 13 is here shown as adjacent to the optional ring, and substantially extending to the rim of the ring. Different embodiments of the protrusion or spline will be shown and discussed further in the disclosure.

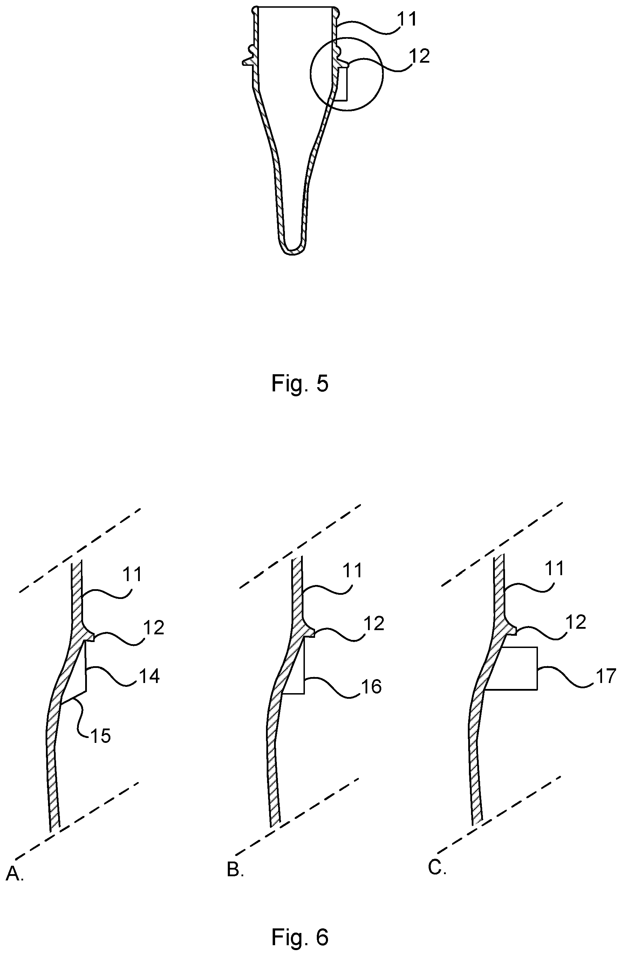

Fig. 5 shows one embodiment where a preform as shown in Fig. 2 has a threaded part 11 and at least one protrusion or spline positioned directly adjacent to a ring 12.

Different embodiments are exemplified in Fig. 6, which shows three detail views of the encircled part of the preform or parison in Fig. 5. The first detailed view (A) shows an embodiment where a protrusion 14 is positioned directly adjacent to the ring 20, below the threaded portion 11, and only extending to a part of the width of the ring 12. Further, the protrusion 14 is here shown having a tapered form or slanted distal part 15. It is conceived that this shape is advantageous in that the preform becomes centered in the shell, and that the preform can be inserted in the shell without risk of damaging the opening of the shell.

The second detailed view (B) shows an embodiment where a protrusion 16 is positioned directly adjacent to the ring 12, and has a substantially rectangular distal part. Such shape may aid in stretching the opening of the shell, securing the connection between the preform and the shell prior to stretch blow molding. It is also conceived that the provision of more volume in the distal part of the protrusion will make the protrusion extend further on the shoulder and body of the liner following the blow molding step. Finally, (C) shows an embodiment where a protrusion 17 is separated from the ring 12, forming a separate vane or blade. It is conceived that this positioning of the protrusion makes it possible to preheat part of the protrusion or the entire protrusion together with the body or distal part of the preform, without risking heating and possibly deforming the proximal part, which must conform to rigorous standards and should remain unchanged.

Fig. 7 shows three embodiments of a preform in cross section as seen from above, where (A) shows one substantially square protrusion; (B) shows three equally spaced protrusions; and (C) shows eight equally spaced protrusions.

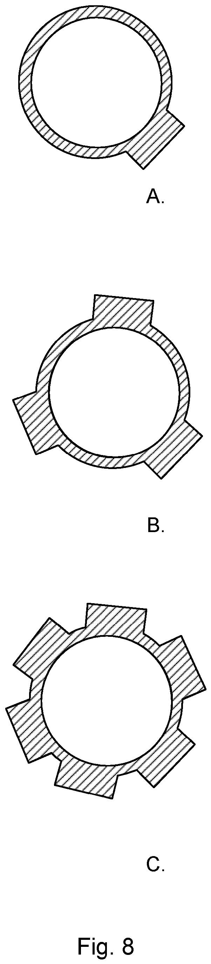

Fig. 8 shows three embodiments of a preform in cross section as seen from above, where (A) shows one substantially rectangular or elongated protrusion; (B) shows three equally spaced protrusions; and (C) shows five equally spaced protrusions. The protrusions are shown in cross section, and can be separate block-shaped protrusions, or elongated, spline-like protrusions.

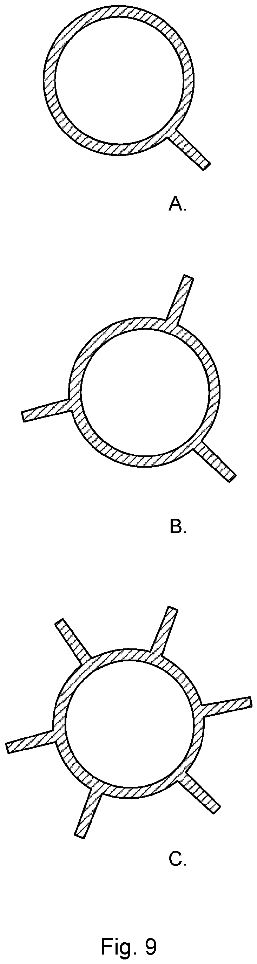

Fig. 9 shows three embodiments of a preform in cross section as seen from above, where (A) shows one protrusion shaped as a spline or vane; (B) shows three equally spaced splines; and (C) shows six equally spaced splines.

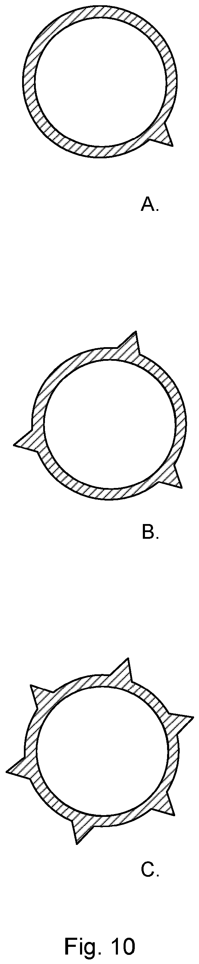

Fig. 10 shows three embodiments of a preform as seen from above, where (A) shows one protrusion shaped as a sharp spline or ridge; (B) shows three equally spaced protrusions; and (C) shows six equally spaced protrusions.

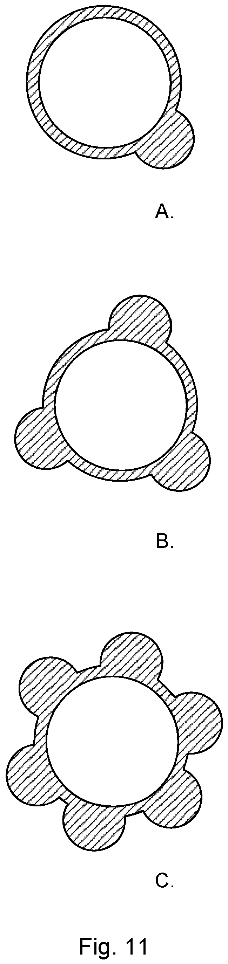

Fig. 11 shows another three embodiments of a preform as seen from above, where (A) shows one rounded protrusion; (B) shows three equally spaced rounded protrusions; and (C) shows six equally spaced rounded protrusions.

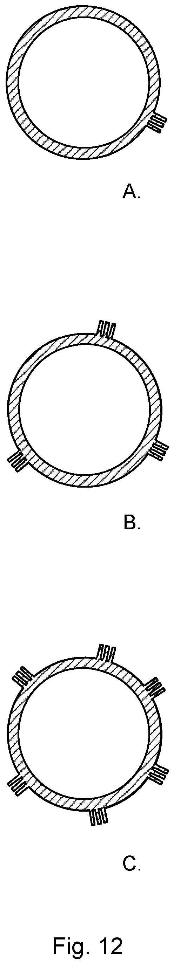

Fig. 12 shows another three embodiments of a preform as seen from above, where (A) shows one protrusion with a comb like structure comprising a number of thin blades; (B) shows three equally spaced comb like protrusions; and (C) shows six equally spaced comb like protrusions. As a result of the blow molding, these will expand and offer an increased area of contact between the liner and the fibre-based shell.

In the figures 7 - 12, the protrusions or splines are shown from above, in cross section. It is conceived that these protrusions also have a longitudinal extension, i.e. that they form vanes or splines extending from the proximal "neck" portion of the preform into the distal "body" of the same. In such embodiments, the protrusions may become drawn-out, extending along the length of the liner or parts thereof, as a result of the blow molding process.

Fig. 13 shows another embodiment where the protrusions are shaped as localized semispherical or conical points, extending substantially radially outwards from the longitudinal center line of the preform, and positioned below the neck. In the detailed views (A) and (B), embodiments are shown where the protrusions are arranged in at least two levels, an upper and a lower level. The third view (C) shows an embodiment with at least one level of protrusions, here illustrated by conical points. The protrusions may also be of different size and shape (not shown). It is however preferred that the different sizes and/or shapes are distributed symmetrically so that the preform becomes centered in the opening of the fibre-based shell when inserted in the same.

Fig. 14 shows yet another embodiment where the protrusion is shaped as an annular or ring-shaped and preferably conically shaped thickening of the preform. In the detailed view (A), this conical thickening is formed separate from the ring which constitutes part of the standardized neck of a preform. One advantage of a separate ring-shaped thickening is that this can be heated without risking heating and possibly deforming the standardized proximal part of the preform. Another advantage is that the ring-shaped thickening can act as a holder for the fibre-based shell prior to the stretch blow molding. With appropriate dimensioning of the ring-shaped thickening, the preform can be fitted into the shell and secured by a so called "snap-lock" mechanism, where the shell elastically embraces the preform.

In (B), the conical thickening is shown as an adjacent or possibly even integrated part of the ring which constitutes part of the standardized neck of a preform. An advantage of this embodiment is that the functions of two features of the preform can be integrated into one, simplifying the shape of the preform and simplifying the injection molding of the preform.

Fig. 15 schematically shows an embodiment where the protrusions are formed as annular flanges positioned below the ring on the neck of the preform. In detail view (A) there flanges are shown, where the flanges are of approximately the same thickness and diameter. In (B), two flanges are shown, where the lower flange has a smaller diameter than the upper flange. The embodiments of Fig. 14 and 15 can be combined, for example to provide a "snap-lock" type fastening.

A third aspect relates to a container comprising a fibre-based shell and plastic liner formed by molding, for example by stretch blow molding a preform inside the shell, said liner having a neck and a body, wherein the resulting liner has a feature which engages the shell and restricts movement of the liner in relation to the shell. The feature is a protruding element.

Said feature of the liner which contacts the shell and restricts movement of the liner in relation to the shell is localized in the part of the liner adjacent to the neck of said liner.

According to an embodiment of said third aspect, freely combinable with above aspects and embodiments, said feature which contacts the shell and restricts movement of the liner in relation to the shell comprises material which was supplied in the form of at least one protrusion of the preform used to produce the liner.

According to another embodiment of said third aspect, freely combinable with above aspects and embodiments, the container is a container for pressurized goods, having a screw cap or screw lid, and the liner contacts the shell and restricts rotational movement of the liner in relation to the shell when the screw cap or screw lid is closed and/or opened, and allows the separation of the liner from the shell when the container is recycled.

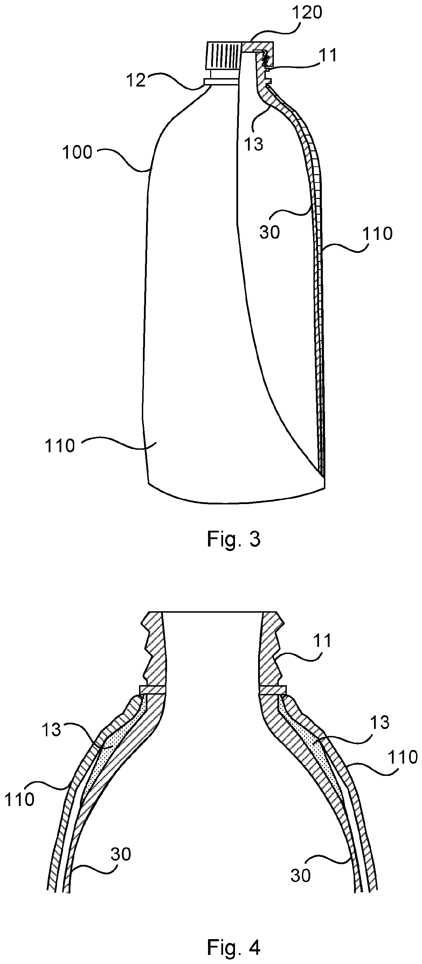

A container according to embodiments disclosed herein is schematically shown in Fig. 3. This is a partial cut-out view of a container 100 according to one or more embodiments, said container comprising a cap 120, a blow molded liner 30, and a fibre-based shell 110, wherein the liner engages the fibre-based shell via protrusions or splines 13. The proximal portion 11, or neck, and the ring 12 (optional) are shown, together forming the standardized portion of the container, having a shape and dimensions allowing the use of a cap 120 or lid.

Fig. 4 is a detail view of the upper part of the container of Fig. 3, with a threaded neck 11, and with the cap removed. The figure schematically shows in cross section how the protrusions or splines 13 on the liner 30 are in contact and engage the fibre-based shell 110. The figure also schematically indicates how the protrusion or spline retains its widest extension close to the proximal part, and then tapers off further distally on the liner.

This is also illustrated schematically in Fig. 16, which is a perspective view of the upper part of a blow molded liner, showing the neck with threads and a ring (optional) and protrusions which - as a result of the stretch blow molding - have become drawn out. The protrusions have maintained their shape closest to the ring, whereupon their shape gradually becomes more and more drawn out.

Fig. 17 shows schematically a blow molded liner from above, without the optional ring, and having three equally spaced protrusions which - as a result of the stretch blow molding - have become drawn out. By designing protrusions of different shape and size, a pattern on the part of the liner closest to the proximal part, and possibly extending partially onto the body, can be formed, creating increased friction between the liner and fibre-based shell.

The disclosed method, preform and resulting container have many advantages as evident from the above detailed description and embodiments. It now becomes possible to produce a plastic liner which is so thin that it would not have sufficient rigidity and strength by itself. The liner now mainly provides the barrier properties, while a fibre-based shell provides the structural properties. In combination, these two components form a liquid packaging suitable in particular for pressurized goods, such as pressurized liquids and carbonated beverages, that previously could be packaged only in glass bottles or thick-walled plastic bottles.

The container disclosed herein also offers environmental advantages, in that it is lighter than traditional glass or plastic container, and in that it makes it possible to separate the plastic liner from the fibre-based shell, making it possible to recycle both components. The container according to embodiments disclosed herein is thus superior to traditional glass and thick-walled plastic bottles as the weight is significantly reduced, with associated savings in material and energy, both in production and in handling. The container is also superior to laminated fiber-based packaging, as it offers improved structural rigidity and is better adapted for recycling.

### Examples

The present inventors have made the following tests: Two different preforms were designed, starting from the conventional preform, but adding splines directly under the ring. In the first design, the preforms had a weight of 22 g and in the other, 14 g. In both preforms, the splines were arranged approximately as illustrated in Figures 6B, 7C and 9C. The preforms were preheated and then stretch blow molded using a conventional apparatus but inside fiber-based shells, weighing 23 g. The weight of the thus formed containers was 45 and 35 g respectively.

It was found that the splines retained their shape in a portion closest to the ring, and then rapidly flared out, as schematically shown in Fig. 16 and 17. The splines provided an improved grip between the liner and the shell, and minimized or even prevented rotational movement of the liner in relation to the shell when subjected to forces normally encountered when a screw cap is opened.

The results also indicate that it is possible to manufacture a strong and durable container having the benefits of a plastic container, but containing approximately 51 % and 62 % fibre-based material.

Without further elaboration, it is believed that a person skilled in the art can, using the present description, including the examples, utilize the present invention to its fullest extent. Also, although the invention has been described herein with regard to its preferred embodiments, which constitute the best mode presently known to the inventors, it should be understood that various changes and modifications as would be obvious to one having the ordinary skill in this art may be made without departing from the scope of the invention which is set forth in the claims appended hereto.

## Claims

1. Method for forming a container comprising a plastic liner and a fibre-based shell, said method comprising
- placing a heated preform in a fibre-based shell,
- blow molding the preform forming a liner inside the shell,
wherein the preform has a proximal portion and a distal portion, and a protrusion, wherein the proximal portion remains substantially unchanged, and the distal portion forms the liner as a result of blow molding, and **characterized in that** said protrusion forms a feature of the liner which engages the shell and restricts movement of the liner in relation to the shell and wherein said at least one protrusion engages with the shell when the preform is inserted into the shell before blow molding.

2. The method according to claim 1, wherein only a portion of said at least one protrusion is heated to the softening temperature of the preform material.

3. The method according to any of the preceding claims, wherein the container is a container having a screw cap or screw lid and said at least one protrusion restricts rotational movement of the liner in relation to the shell when the cap or lid is opened and/or closed.

4. The method according to any of the preceding claims, wherein the container is a container for pressurized goods.

5. A preform for forming a plastic liner inside a fibre-based shell by blow molding, wherein the preform has a proximal portion which remains substantially unchanged during blow molding, and a distal portion which as a result of the blow molding forms a liner inside the shell, **characterized in that** the preform has at least one protrusion which upon blow molding forms a feature of the liner which engages the shell and restricts movement of the liner in relation to the shell and wherein said at least one protrusion is located in a transition area between the proximal portion and the distal portion.

6. The preform according to claim 5, wherein said proximal portion has a standardized neck finish including threads or lugs for attaching a cap and a ring for facilitating handling of the preform and wherein the at least one protrusion is positioned directly adjacent the ring.

7. The preform according to claim 5, wherein said at least one protrusion has a shape chosen from a rectangular shape, a tapered shape, a wedge-like shape, a square shape, a sharp point, a semi-spherical point, an elongated sharp or rounded ridge, spline, serrated shape, hemispherical shape or welt-like shape or a combination thereof.

8. The preform according to claim 7, wherein at least three protrusions are present, equally spaced around the periphery of the preform.

9. The preform according to claim 5, wherein said at least one protrusion is shaped as an annular protrusion around the preform.

10. The preform according to claim 5, wherein said at least one protrusion is located so, that only a part of said at least one protrusion, or in the case of two or more protrusions, only a sub-group of the protrusions reach the softening temperature of the preform material when the preform is heated prior to blow molding.

11. A container comprising a fibre-based shell and plastic liner formed by blow molding a preform inside the shell, said liner having a neck and a body, **characterized in that** the blow molded liner has a protruding element which engages the shell and restricts movement of the liner in relation to the shell and wherein said protruding element of the liner which engages the shell and restricts movement of the liner in relation to the shell is localized in the part of the liner adjacent to the neck of said liner.

12. The container according to claim 11, wherein said protruding element which engages the shell and restricts movement of the liner in relation to the shell comprises material which was supplied in the form of at least one protrusion of the preform used to produce the liner.

13. The container according to claim 11, wherein the container is a container for pressurized goods, having a screw cap or screw lid, and the protruding element prevents rotational movement of the liner in relation to the shell when the screw cap or screw lid is closed and/or opened, and allows the separation of the liner from the shell when the container is recycled.

## Patentansprüche

1. Verfahren zum Bilden eines Behälters, der eine Kunststoffauskleidung und eine faserbasierte Hülle aufweist, wobei das Verfahren aufweist
- Platzieren einer erhitzten Vorform in eine faserbasierte Hülle
- Blasformen der Vorform unter Bildung einer Auskleidung innerhalb der Hülle,
wobei die Vorform einen proximalen Teil und einen distalen Teil und einen Vorsprung hat,
wobei der proximale Teil im Wesentlichen unverändert bleibt und der distale Teil als Ergebnis des Blasformens die Auskleidung bildet, und
**dadurch gekennzeichnet,**
**dass** der Vorsprung ein Merkmal der Auskleidung bildet, das mit der Hülle in Eingriff steht und eine Bewegung der Auskleidung in Bezug auf die Hülle beschränkt, und wobei der mindestens eine Vorsprung mit der Hülle in Eingriff steht, wenn die Vorform vor dem Blasformen in die Hülle eingeführt wird.

2. Verfahren nach Anspruch 1, wobei nur ein Teil des mindestens einen Vorsprungs auf die Erweichungstemperatur des Vorformmaterials erhitzt wird.

3. Verfahren nach einem der vorhergehenden Ansprüche, wobei der Behälter ein Behälter ist, der eine Schraubkappe oder einen Schraubdeckel hat, und der mindestens eine Vorsprung eine Drehbewegung der Auskleidung in Bezug auf die Hülle beschränkt, wenn die Kappe oder der Deckel geöffnet und/oder geschlossen wird.

4. Verfahren nach einem der vorhergehenden Ansprüche, wobei der Behälter ein Behälter für druckbeaufschlagte Waren ist.

5. Vorform zum Bilden einer Kunststoffauskleidung innerhalb einer faserbasierten Hülle durch Blasformen, wobei die Vorform einen proximalen Teil hat, der während des Blasformens im Wesentlichen unverändert bleibt, und einen distalen Teil, der als ein Ergebnis des Blasformens eine Auskleidung innerhalb der Hülle bildet, **dadurch gekennzeichnet, dass** die Vorform mindestens einen Vorsprung hat, der beim Blasformen ein Merkmal der Auskleidung bildet, das mit der Hülle in Eingriff steht und die Bewegung der Auskleidung in Bezug auf die Hülle beschränkt, und wobei der mindestens eine Vorsprung in einem Übergangsbereich zwischen dem proximalen Teil und dem distalen Teil angeordnet ist.

6. Vorform nach Anspruch 5, wobei der proximale Teil ein standardisiertes Halsende hat, das Gewinde oder Ansätze zum Anbringen einer Kappe und einen Ring zum Erleichtern der Handhabung der Vorform umfasst, und wobei der mindestens eine Vorsprung direkt neben dem Ring positioniert ist.

7. Vorform nach Anspruch 5, wobei der mindestens eine Vorsprung eine Form hat, die aus einer rechteckigen Form, einer konischen Form, einer keilförmigen Form, einer quadratischen Form, einer scharfen Spitze, einer halbkugelförmigen Spitze, einem länglichen scharfen oder abgerundeten Grat, einem Keil, einer gezackten Form, einer Halbkugelform oder beulenartigen Form, oder einer Kombination davon, ausgewählt ist.

8. Vorform nach Anspruch 7, wobei mindestens drei Vorsprünge vorhanden sind, die um den Umfang der Vorform herum gleichmäßig beabstandet sind.

9. Vorform nach Anspruch 5, wobei der mindestens eine Vorsprung als ringförmiger Vorsprung um die Vorform herum geformt ist.

10. Vorform nach Anspruch 5, wobei der mindestens eine Vorsprung so angeordnet ist, dass nur ein Teil des mindestens einen Vorsprungs, oder im Fall von zwei oder mehr Vorsprüngen, nur eine Untergruppe der Vorsprünge die Erweichungstemperatur des Vorformmaterials erreicht, wenn die Vorform vor dem Blasformen erhitzt wird.

11. Behälter, der eine faserbasierte Hülle und eine Kunststoffauskleidung, die durch Blasformen einer Vorform innerhalb der Hülle gebildet ist, aufweist, wobei die Auskleidung einen Hals und einen Körper hat, **dadurch gekennzeichnet, dass** die blasgeformte Auskleidung ein hervorstehendes Element hat, das mit der Hülle in Eingriff steht und die Bewegung der Auskleidung in Bezug auf die Hülle beschränkt, und wobei das vorstehende Element der Auskleidung, das mit der Hülle in Eingriff steht und die Bewegung der Auskleidung in Bezug auf die Hülle beschränkt, in dem Teil der Auskleidung benachbart zu dem Hals der Auskleidung lokalisiert ist.

12. Behälter nach Anspruch 11, wobei das vorstehende Element, das mit der Hülle in Eingriff steht und die Bewegung der Auskleidung in Bezug auf die Hülle beschränkt, Material aufweist, das in der Form mindestens eines Vorsprungs der zur Herstellung der Auskleidung verwendeten Vorform aufgebracht wurde.

13. Behälter nach Anspruch 11, wobei der Behälter ein Behälter für druckbeaufschlagte Waren ist, der eine Schraubkappe oder einen Schraubdeckel hat, und das hervorstehende Element eine Drehbewegung der Auskleidung in Bezug auf die Hülle verhindert, wenn die Schraubkappe oder der Schraubdeckel geschlossen und/oder geöffnet wird, und die Trennung des Auskleidung von der Hülle erleichtert, wenn der Behälter recycelt wird.

## Revendications

1. Procédé destiné à la formation d'un récipient comprenant une doublure en matière plastique et une coque à base de fibres, ledit procédé comprenant :
- le positionnement d'une préforme chauffée dans une coque à base de fibres,
- le moulage par soufflage de la préforme formant une doublure située à l'intérieur de la coque,
dans lequel la réforme comporte une partie proximale et une partie distale, et une protubérance,
dans lequel la partie proximale reste sensiblement inchangée, et la partie distale forme la doublure à la suite du moulage par soufflage,
et **caractérisé en ce que**
ladite protubérance forme une caractéristique de la doublure qui vient en prise avec la coque et restreint le mouvement de la doublure par rapport à la coque et dans lequel ladite au moins une protubérance vient en prise avec la coque lorsque la préforme est insérée dans la coque avant son moulage par soufflage.

2. Procédé selon la revendication 1, dans lequel une partie de ladite au moins une protubérance est uniquement chauffée à la température de ramollissement du matériau de préforme.

3. Procédé selon l'une quelconque des revendications précédentes, dans lequel le récipient est un récipient comportant une capsule à vis ou un couvercle à vis et ladite au moins une protubérance restreint le mouvement de rotation de la doublure par rapport à la coque lorsque la capsule ou le couvercle est ouvert(e) et/ou fermé(e).

4. Procédé selon l'une quelconque des revendications précédentes, dans lequel le récipient est un récipient destiné à des produits sous pression.

5. Préforme destinée à la formation d'une doublure en matière plastique située à l'intérieur d'une coque à base de fibre au moyen d'un moulage par soufflage, dans laquelle la préforme comprend une partie proximale qui reste sensiblement inchangée pendant le moulage par soufflage et une partie distale qui, par l'effet du moulage par soufflage, forme une doublure à l'intérieur de la coque, **caractérisée en ce que** la préforme comporte au moins une protubérance qui, lors du moulage par soufflage, forme une caractéristique de la doublure qui vient en prise avec la coque et restreint le mouvement de la doublure par rapport à la coque et dans laquelle ladite au moins une protubérance est située dans une zone de transition située entre la partie proximale et la partie distale.

6. Préforme selon la revendication 5, dans laquelle ladite partie proximale présente une bague de col standardisée comprenant des filets ou des languettes permettant d'attacher une capsule et un anneau permettant de faciliter la manipulation de la préforme et dans laquelle l'au moins une protubérance est positionnée directement de manière adjacente à l'anneau.

7. Préforme selon la revendication 5, dans laquelle ladite au moins une protubérance comporte une forme choisie parmi une forme rectangulaire, une forme filetée, une forme en coin, une forme carrée, une pointe aiguë, une pointe semi-sphérique, une nervure allongée aiguë ou arrondie, une forme cannelée, une forme hémisphérique ou une forme de zébrure ou une combinaison de celles-ci.

8. Préforme selon la revendication 7, dans laquelle au moins trois protubérance sont présentes, également espacées autour de la périphérie de la préforme.

9. Préforme selon la revendication 5, dans laquelle ladite au moins une protubérance est de la forme d'une protubérance annulaire autour de la préforme.

10. Préforme selon la revendication 5, dans laquelle ladite au moins une protubérance est située de sorte qu'uniquement une partie de ladite au moins une protubérance, ou dans le cas d'au moins deux protubérance, uniquement un sous-groupe des protubérances atteigne la température de ramollissement du matériau de préforme lorsque la préforme est chauffé avant son moulage par soufflage.

11. Récipient comprenant une coque à base de fibres et une doublure en matière plastique formée par moulage par soufflage d'une préforme située à l'intérieur de la coque, ladite doublure comportant un col et un corps, **caractérisé en ce que** la doublure moulée par soufflage comporte un élément faisant saillie qui vient en prise avec la coque et qui restreint le mouvement de la doublure par rapport à la coque et dans lequel ledit élément faisant saillie de la doublure qui vient en prise avec la coque et qui restreint le mouvement de la doublure par rapport à la coque est situé dans la partie de la doublure qui est adjacente au col de ladite doublure.

12. Récipient selon la revendication 11, dans lequel l'élément faisant saillie qui vient en prise avec la coque et qui restreint le mouvement de la doublure par rapport à la coque comprend un matériau qui a été fourni sous la forme d'au moins une protubérance de la préforme utilisée pour produire la doublure.

13. Récipient selon la revendication 11, dans lequel le récipient est un récipient destiné à des produits sous pression, ayant une capsule à vis ou un couvercle à vis, et l'élément faisant saillie empêche le mouvement de rotation de la doublure rapport à la coque lorsque la capsule à vis ou le couvercle à vis est fermé (e) et/ou ouvert (e), et permet la séparation de la doublure de la coque lorsque le récipient est recyclé.
